Europäisches Patentamt

European Patent Office

Office européen des brevets

(19)

(11) Veröffentlichungsnummer: **0 210 415 B1**

# EUROPÄISCHE PATENTSCHRIFT

(12)

(45) Veröffentlichungstag der Patentschrift: **30.10.91**

(21) Anmeldenummer: **86108399.6**

(22) Anmeldetag: **19.06.86**

(51) Int. Cl.⁵: **B01J 2/00**, B01J 2/20, C07C 29/94

(54) **Verfahren zum Konfektionieren von kristallinen, organischen Materialien.**

(30) Priorität: **22.06.85 DE 3522359**

(43) Veröffentlichungstag der Anmeldung:
**04.02.87 Patentblatt 87/06**

(45) Bekanntmachung des Hinweises auf die Patenterteilung:
**30.10.91 Patentblatt 91/44**

(84) Benannte Vertragsstaaten:
**BE DE FR GB IT NL SE**

(56) Entgegenhaltungen:
**EP-A- 0 054 868**
**EP-A- 0 177 428**

(73) Patentinhaber: **BASF Aktiengesellschaft**
**Carl-Bosch-Strasse 38**
**W-6700 Ludwigshafen(DE)**

(72) Erfinder: **Hupfer, Leopold, Dr.**
**Waltershoehe 3**
**W-6701 Friedelsheim(DE)**
Erfinder: **Paetsch, Jürgen, Dr.**
**Am Altenbach 30**
**W-6706 Wachenheim(DE)**
Erfinder: **Hotz, Johann**
**Landsberger Strasse 2**
**W-6703 Limburgerhof(DE)**
Erfinder: **Thiele, Heino, Dr.**
**An der Froschlache 23**
**W-6700 Ludwigshafen(DE)**
Erfinder: **Zettler, Hans Dieter**
**Bückelhaube 23**
**W-6718 Grünstadt(DE)**

Rank Xerox (UK) Business Services

**Beschreibung**

Zur Darstellung der Erfindungs-Gattung ist im Oberbegriff des Anspruchs 1 von einem bekannten Verfahren im Sinne der EP-A-54 868 ausgegangen, nach dem bisher Granulate aus organischen in Form einer Schmelze vorliegenden Stoffen durch Kühlkristallisation in einer Zweiwellenschneckenmaschine und anschließende Extrusion durch eine Lochplatte hergestellt wurden. Dabei werden die Temperatur in der Schneckenmaschine, ihre Drehzahl und die Temperatur der Lochplatte so eingestellt, daß bis zum Ende der Schnecken 70 % bis 99,5 % des Materials erstarren. Der Restanteil der flüssigen Phase wird erst bei der Nachkühlung, nachdem das Material durch die auf eine Temperatur im Bereich von ±20°C der Schmelztemperatur des Materials erwärmte Lochplatte ausgetragen wurde, auskristallisiert.

Mit der Erfindung soll ein Verfahren zum Konfektionieren von kristallinen, organischen Materialien geschaffen werden, welches insbesondere die Herstellung von Granulat hoher Lagerstabilität und guter Löslichkeit ermöglicht.

Zur Lösung dieser Aufgabe werden die Maßnahmen nach dem Kennzeichen des Anspruchs 1 vorgeschlagen.

Organische Materialien, welche unter Normalbedingungen kristallin sind, sind beispielsweise Polyole, wie Neopentylglykol, Hydroxypivalinsäureneopentylglykolester, Hexandiol, Trimethylolpropan, Säureanhydride, wie Phthalsäureanhydrid, Terephthalsäureanhydrid, Maleinsäureanhydrid, 4-Methylbenzophenon-Carbonsäure, 4-Chlorbenzophenon-Carbonsäure, Lactame, wie Caprolactam, Phenole, wie Diethylphenol, ß-Naphthol oder Amine, wie Phenyl-ß-naphthylamin und 4,4'-Diamino-diphenyl-methan.

Diese Materialien werden in pulverförmigem und/oder geschmolzenem Zustand in eine Schneckenmaschine eingebracht, welche an sich bekannt und handelsüblich ist. Geeignet sind insbesondere selbstreinigende, zweiwellige Schneckenmaschinen mit im gleichen Sinne rotierenden Schneckenwellen und zonenweiser Kühlung des Gehäuses. Die Schneckenwellen sind zweckmäßig mit einer Temperiereinrichtung versehen, so daß Wärme auch von den Schnecken aufgenommen und beispielsweise im Schneckenkern durch koaxiale Stromführung abgeführt werden kann. Hierzu ist in einer axialen Schneckenbohrung ein innen glattes und außen mit Zwangsumlaufkanälen versehenes Rohr eingefügt. Der Umlaufkanal entspricht einem Schneckengang mit Gegengewinde. Das eingeschlossene Kühlmedium wird zwangsweise bis zu den Schneckenspitzen transportiert und verdampft an den Zonen hoher Temperatur. Der Dampf strömt im Zentralrohr zu den niedrigeren Temperaturzonen zurück, kondensiert und wird wieder in den Kreislauf einbezogen. Da die Temperatur beider Schneckenwellen gleich sein muß, sind die entsprechenden Zu- und Rückleitungen gekoppelt.

In der Schneckenmaschine erfolgt die Aufbereitung der Materialien, d.h. pulverförmiges Material wird verdichtet und schmelzflüssiges Material wird kristallisiert und verdichtet. Dabei wird die Schneckenmaschine gekühlt. Die Temperatur des Gehäuses und der Schneckenwellen wird im allgemeinen so gewählt, daß sich Massetemperaturen ergeben, die etwa 1 bis etwa 20°C unterhalb des Schmelzpunktes des eingesetzten Materials liegen. Das Material wird sodann durch wenigstens einen verengten Durchgang, vorzugsweise durch eine beheizte Lochplatte mit einem Durchlaß oder mit mehreren Durchlässen von 1 bis 15 mm Durchmesser, in eine Zone von niederem Druck ausgestoßen. Während des Austragens durch die Lochplatte wird diese auf eine Temperatur von 1 bis 30°C oberhalb des Schmelzpunktes des Materials erwärmt. Hierfür ist die Lochplatte vorzugsweise mittels Dampf oder elektrisch beheizbar. Wesentlich ist dabei ein gleichmäßiges Temperaturprofil der Lochplatte, d.h. die Temperatur im Bereich aller Durchlässe muß auf gleiche Werte eingestellt werden, um ein gleichmäßiges Austragen der Materialstränge zu gewährleisten. Insgesamt hat es sich als zweckmäßig erwiesen die Materialien mit einem spezifischen Volumenstrom von etwa 0,05 bis etwa 1,5 m³ pro sec pro m² aus den Durchlässen auszutragen. Durch die Erwärmung werden die an der Wandung eines Durchlasses vorbeigeführten Einzelkristalle zu einem Film aufgeschmolzen, welcher nach seiner Erstarrung ein festes Korsett für das kompaktierte kristalline Material bildet.

Erfindungsgemäß kann auf die normalerweise zur Extrusion erforderliche Plastizität des Materials und damit auf den bis zum Ende der Schnecke nicht erstarrten Materialanteil verzichtet werden. Ein genaues Einstellen von Temperatur und Drehzahl der Schneckenmaschine zum Erreichen eines bestimmten Kristallisationsgrades ist nicht erforderlich, da der Kristallisationsgrad am Ende der Schneckenmaschine sogar 100 % beträgt. Dadurch können auch Pulver extrudiert und in eine lagerstabile, staubarme Granulatform überführt werden.

Der Schmelzefilm, dessen Dicke bis zu 0,2 mm, vorzugsweise jedoch weniger als 0,1 mm, betragen kann, erzeugt beim Erstarren nach Austritt aus dem Durchgang eine glatte Oberfläche, während im Inneren des Stranges bei völlig durchkristallisierten Materialien eine feinkörnige Struktur erhalten bleibt. Dies hat den Vorteil, daß sich dadurch eine besonders gute Löslichkeit der Granulate erzielen läßt. Durch den Schmelzefilm wird ferner eine sehr starke Verminderung des Druckverlustes beim Durchströmen des verengten Durchgangs erreicht. Dadurch kann die erforderliche spezifische Antriebsleitung der Schneckenmaschine im allgemeinen von Werten größer 0,05 kWH/kg auf Werte kleiner 0,01 kWH/kg also auf weniger als 1/5 des üblichen Wertes reduziert werden. Die wirtschaftlichen Vorteile des erfindungsgemäßen Verfahrens sind damit offensichtlich.

Die extrudierten Materialstränge werden in der nachfolgenden Zone zerkleinert und gekühlt. Vorzugsweise werden die Stränge in Teilchen zerkleinert, die eine Länge entsprechend dem 2- bis 20-fachen des Durchmessers der Durchlässe haben.

Auf diese Weise konfektionierte organische Materialien zeichnen sich durch verbesserte Rieselfähigkeit und gute Lagerstabilität aus. Das Verfahren läßt sich in nach außen abgeschlossenen Aggregaten durchführen, so daß auch sublimierende oder geruchsbelästigende Materialien kontinuierlich konfektioniert werden können. Es werden insbesondere staubarme Produkte mit einer durch den Schmelzfilm gebildeten, glatten Oberfläche erhalten.

### Beispiel

Schmelzflüssiges ß-Naphthol ($T_{Schm}$ = 121° C) wird in einer zweiwelligen, modifizierten Wärmetauscherschnecke Typ ZDS-K 53 kontinuierlich durch Abkühlen bei 30° C kristallisiert und mit Hilfe einer Lochplatte mit 10 Durchlässen von je 3 mm Durchmesser zu Strängen extrudiert. Die Lochplatte ist auf 137° C erwärmt; der Durchsatz beträgt 150 kg/h; die spez. Antriebsleistung liegt bei 0,02 kWh/kg. Die Stränge verlassen die Lochplatte mit einer Temperatur von etwa 114° C und werden in einem Ablaufschacht einem gekapselten, kontinuierlich arbeitenden Kühlwendelförderer zugeführt. Dabei zerbrechen die Stränge zu Granulat von 5 - 10 mm Länge. Die Granulate werden in einem Kühlwendelförderer auf 60 - 65° C abgekühlt und anschließend in entsprechende 25-kg-Gebinde abgefüllt.

Versuche zur Ermittlung der Lagerstabilität wurden in einer Kammer bei 40° C und einer relativen Luftfeuchte von 95 % durchgeführt. Die Gebinde waren einer Belastung von 3750 N ausgesetzt. Nach 6-monatiger Lagerung war eine einwandfreie Entleerung der Gebinde möglich. Agglomerate wurden nicht festgestellt.

### Patentansprüche

1. Verfahren zum Konfektionieren von unter Normalbedingungen kristallinen, organischen Materialien, bei dem die Materialien in pulverförmigem und/oder schmelzflüssigem Zustand einer selbstreinigenden, zweiwelligen Schneckenmaschine mit im gleichen Sinne rotierenden Schneckenwellen zugeführt, in der Schneckenmaschine verdichtet bzw. kristallisiert und verdichtet, durch wenigstens einen verengten Durchgang in eine Zone von niederem Druck ausgestoßen, gekühlt und in Teilchen zerkleinert werden, dadurch gekennzeichnet, daß bis zum Eintritt in den verengten Durchgang die pulverförmigen Materialien pulverförmig erhalten bleiben bzw. die schmelzflüssigen Materialien vollständig durchkristallisiert werden, und daß die Materialien während des Austragens durch den verengten Durchgang zur Bildung eines Schmelzefilms erwärmt werden.

2. Verfahren nach Anspruch 1, dadurch gekennzeichnet, daß die Materialien durch eine heizbare Lochplatte mit Durchlässen von 1 bis 15 mm Durchmesser ausgestoßen und in Teilchen zerkleinert werden, die eine Länge entsprechend dem 2- bis 20-fachen des Durchmessers der Durchlässe haben.

3. Verfahren nach den Ansprüchen 1 und 2, dadurch gekennzeichnet, daß die Materialien mit einem spezifischen Volumenstrom von etwa 0,05 bis etwa 1,5 m³ pro sec pro m² aus den Durchlässen ausgetragen werden.

### Claims

1. A process for compounding an organic material which is crystalline under standard conditions, in which the material, in the pulverulent and/or molten state, is fed to a self-purging, twin-screw extruder in which the screws rotate in the same direction, compacted or crystallized and compacted in the extruder, ejected through one or more narrow passages into a low pressure zone, cooled and comminuted to give particles, wherein the pulverulent material remains pulverulent or the molten material has completely crystallized by the time it enters the narrow passage, and the material is heated during discharge through the narrow passage, in order to form a melt film.

2. A process as claimed in claim 1, wherein the material is ejected through a heatable perforated plate having holes of from 1 to 15 mm diameter, and is comminuted to give particles whose length is from 2 to 20 times the diameter of the holes.

3. A process as claimed in claim 1 or 2, wherein the material is discharged through the holes at a specific volume flow rate of from about 0.05 to about 1.5 m³ per sec per m².

## Revendications

1. Procédé pour former des granulés de matières organiques cristallines dans les conditions normales, dans lequel les matières sont envoyées à l'état pulvérulent et/ou liquide fondu dans une machine à vis auto-nettoyante à deux axes dont les axes de vis tournent dans le même sens, sont comprimées ou respectivement cristallisées et comprimées dans la machine à vis, refoulées au travers d'au moins un passage étroit dans une zone à pression plus basse, refroidies et mises en petits morceaux, caractérisé en ce que, jusqu'à l'entrée du passage étroit, les matières pulvérulentes restent pulvérulentes et les matières liquides fondues sont entièrement cristallisées et en ce que les matières, pendant le refoulement au travers du passage étroit, sont chauffées pour formation d'une pellicule en fusion.

2. Procédé selon la revendication 1, caractérisé en ce que les matières sont refoulées au travers d'une plaque perforée chauffable à passages de 1 à 15 mm de diamètre et mises à l'état de petits morceaux dont la longueur représente de 2 à 20 fois le diamètre des passages.

3. Procédé selon les revendications 1 et 2, caractérisé en ce que les matières sont refoulées au travers des passages à un débit en volume d'environ 0,05 à 1,5 $m^3$ par s et par $m^2$.